# EUROPEAN PATENT APPLICATION

(11) **EP 2 657 085 A1**
(43) Date of publication of application: **30.10.2013**
(21) Application number: 11853030.2
(22) Date of filing: 21.12.2011
(51) Int. Cl.: B60R 1/04, B60R 1/12

(54) **NOVEL SAFETY REAR-VIEW MIRROR FOR THE REAR SEATS OF VEHICLES**

(30) Priority: 22.12.2010 ES 201001304 U
(71) Applicant: Ros Santasusana, Luis, 08006 Barcelona (ES)
(72) Inventor: Ros Santasusana, Luis, 08006 Barcelona (ES)
(74) Representative: Isern-Jara, Nuria
(86) International application number: PCT/ES2011/000375
(87) International publication number: WO 2012/089865

(57) **Abstract**

The invention relates to a novel safety rear-view mirror for the rear seats of vehicles, comprising a rigid plate. One face of the rigid plate has a polished reflective surface, while the other face thereof is covered with an opaque coating except in at least one area corresponding to signs and/or images that are made visible by means of transparency with the aid of a light bulb located in a plate connected to said face. The aforementioned plate comprises an LCD/LED-type light generator which can be replaced with an incandescent lamp.

## Description

### OBJECT OF THE INVENTION

This utility model relates to a novel safety rear-view mirror for the rear seats of vehicles.

### FIELD OF THE INVENTION

The field of invention relates to the manufacture and use of accessories intended to enhance safety in vehicles, specifically for safeguarding against accidents that occur when opening and closing the rear doors thereof.

### BACKGROUND OF THE INVENTION

It is known that when driving vehicles in heavy urban traffic, especially on busy public roads, accidents can happen when opening the rear doors of vehicles, especially in the middle of traffic consisting largely of other vehicles, including motorcycles and the like.

The need for a device that makes it possible to indicate the immediate presence of other vehicles to the occupants of the rear seats of cars when opening the respective doors, was therefore recognised. This sign must advise these occupants to take appropriate safety measures to protect against any impacts that could lead to serious accidents.

### BRIEF DESCRIPTION OF THE INVENTION

The aim is to make a device that, when applied to each of the intermediate pillars (called B pillars) of a car, indicates to an occupant in a rear seat that another vehicle is approaching the rear-side of the first vehicle, and thus the general rule of not opening the rear door to get out, until the vehicles are separated by a safe distance.

The device in question comprises a reflective surface that acts as a rear-view mirror and is provided with a precaution and warning graphic display.

To facilitate explanation, drawings are attached to the present description in which, by way of non-limiting example, an embodiment of a novel safety rear-view mirror for the rear seats of vehicles is shown, according to the principles of the claims.

### BRIEF DESCRIPTION OF THE DRAWINGS

Figure 1 represents several different versions of the novel safety rear-view mirror.
Figure 2 shows the application of the novel device to pillar B on the left side of a car.
Figure 3 shows the application of the device to the right rear door of a car.
Figure 4 illustrates the use of lighting means for displaying images or signs on the device itself.

### DETAILED DESCRIPTION OF THE INVENTION

The elements that have been assigned numbers in the drawings correspond to the parts indicated below.

The safety rear-view mirror described basically consists of a plate 1 to be applied on the, preferably flat, surface of the inside of a car.

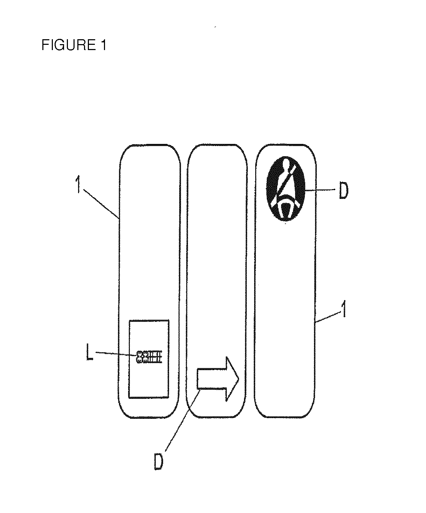

Plate 1 may be made of any suitable rigid material and any geometric shape (square, circular, oval, etc.) such as those shown in figure 1. One of its faces is functional and front-facing, and the other side (back) is fixed by suitable means, for example, an adhesive material on the relevant surface inside the vehicle.

The front, functional face of the device is reflective, i.e., it has a specular finish, and once the plate is fixed in its operating position, it should enable the exterior, lateral and rear space of the vehicle to be displayed by reflection.

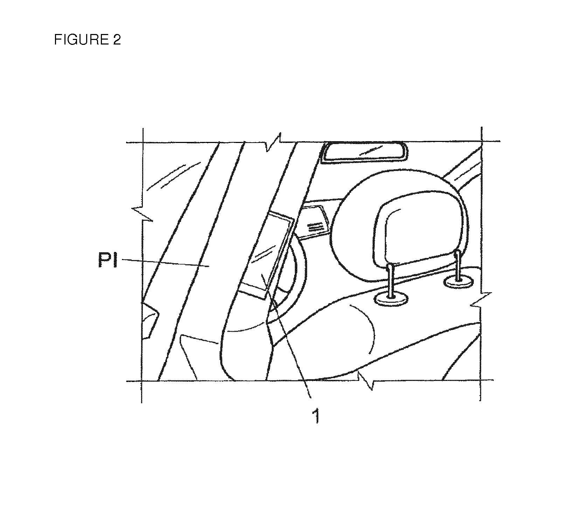

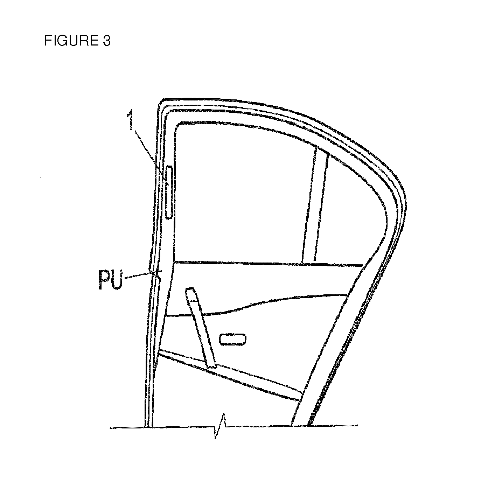

Figures 2 and 3 respectively show plate 1 applied to the inside of a pillar PI of a car and to a jamb of a rear door PU of the vehicle.

Plate 1 advantageously incorporates signs L, logos D or other warning signs for the occupants of the rear seats of the passenger compartment of a car, some of which, merely as an example, are seen in Fig. 1. The signs can be, for example, "Wear your safety belt", "Be careful when opening the door", "Look before you get out", "No smoking" and the like, and the logos or graphic information will correspond to these warning messages.

The reflective plate 1 may be of the type wherein the usual opaque coating of the rear face of the mirror comprises, by means of transparency, the signs or images that the plate should have and these are only visible under certain conditions (for example, when a passenger gets into the passenger compartment or is about to open a door).

In this case, the visibility of the signs or images would depend on lighting applied to the rear face of the plate and obtained by means of an LCD/LED-type electronic device (similar to those used in the instrument panels of vehicles) or simply a small incandescent lamp, powered by the car's electrical installation.

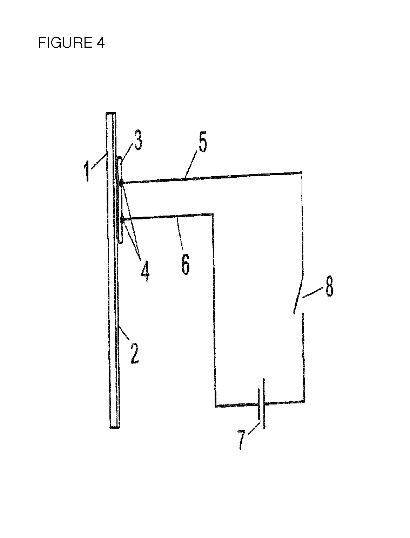

Figure 4 represents the possible embodiment of the novel safety mirror, in which the plate 1 comprises a plate 3 that houses a light bulb of one of the aforementioned types on its rear surface 2, which is provided with an opaque coating except on areas with an L or D sign to be displayed. The terminals 4 of plate 3 are joined conventionally, by means of leads 5 and 6, to the electrical installation, represented by battery 7, with the interposition of a switch 8, which is actuated on opening a door.

Said signs or pictures could also be included in the exterior, right and left rear-view mirrors of the vehicle by means of the LCD/LED-type electronic light generators or incandescent lamp mentioned above.

## Claims

1. A novel safety rear-view mirror for the rear seats of vehicles, **characterised in that** it comprises a rigid plate (1), wherein one face of the rigid plate has a polished reflective surface (E), while the other face (2) thereof is covered with an opaque coating except in at least one area of the aforementioned coating corresponding to signs and/or images (L,D) that are made visible by means of transparency with the aid of a light bulb located in a plate (3) connected to said face (2).

2. A novel safety rear-view mirror for the rear seats of vehicles according to claim 1, **characterised in that** the plate (3) comprises an LCD/LED-type electronic light generator.

3. A novel safety rear-view mirror for the rear seats of vehicles according to claim 1, **characterised in that** the plate (3) comprises a light generator that comprises an incandescent lamp.
